## Europäisches Patentamt
## European Patent Office
## Office européen des brevets

(19)

(11) Numéro de publication: **0 065 710**
**B1**

(12)

# FASCICULE DE BREVET EUROPEEN

(45) Date de publication du fascicule du brevet:
14.11.84

(51) Int. Cl.³: **C 04 B 35/56**

(21) Numéro de dépôt: 82104167.0

(22) Date de dépôt: 13.05.82

(54) Procédé de fabrication d'une pièce céramique en carbure de silicium fritté.

(30) Priorité: 18.05.81 FR 8109822

(43) Date de publication de la demande:
01.12.82 Bulletin 82/48

(45) Mention de la délivrance du brevet:
14.11.84 Bulletin 84/46

(84) Etats contractants désignés:
BE DE FR GB IT NL

(56) Documents cités:
FR - A - 2 337 750
FR - A - 2 413 345
FR - A - 2 432 491
GB - A - 706 728

(73) Titulaire: CERAVER Société anonyme dite:, 12, rue de la Baume, F-75008 Paris (FR)

(72) Inventeur: Minjolle, Louis, 10, rue Jeanne d'Albret, F-65000 Tarbes (FR)
Inventeur: Lengronne, Bernard, Monsegur, F-64460 Pontiacq-Vieliepinte (FR)
Inventeur: Calvet, Joseph, Résidence Beau Soleil Escalier E, F-65000 Tarbes (FR)
Inventeur: Chateigner, Serge, 28, rue de Lacassagne, F-65140 Rabastens de Bigorre (FR)

(74) Mandataire: Weinmiller, Jürgen et al, Zeppelinstrasse 63, D-8000 München 80 (DE)

## Description

La présente invention concerne un procédé de fabrication d'une pièce céramique en carbure de silicium fritté, dans lequel

a) on forme un mélange comprenant une poudre de carbure de silicium, au moins un adjuvant de frittage du groupe comprenant le bore ou les composés du bore, le béryllium ou les composés du béryllium, l'aluminium ou les composés de l'aluminium, du polystyrène formant, en mélange avec une cire de température de volatilisation inférieure à la sienne, un agent de moulage par injection, et procurant par sa carbonisation au cours du frittage de 0,5 à 5% en poids de carbone, rapportés au poids de carbure de silicium,

b) on forme par injection une pièce moulée,

c) on cuit la pièce moulée, et

d) on fritte la pièce moulée cuite à une température comprise entre 1900 et 2200°C, sous atmosphère inerte ou sous vide.

On a déjà proposé, dans le document FR-A N° 2432491, un procédé de ce genre, dans lequel on effectue la cuisson de la pièce moulée à une température comprise entre 500 et 1000°C, dans des conditions telles que l'excès de carbone requis pour faciliter le frittage soit procuré par la carbonisation du polystyrène, ce qui implique une cuisson en atmosphère non oxydante. On ajoute par ailleurs au mélange initial de 0,1 à 3% en poids, rapportés au poids total du mélange, d'un organotitanate tel que le titanate de tétra-(2-éthylhexyle), de façon à abaisser sa viscosité.

Un tel procédé nécessite, du fait de la température de cuisson élevée, une montée en température très progressive, à une vitesse de 1 à 10°C/h, jusqu'à la température finale, et par suite une cuisson de longue durée, pour éviter des déformations des pièces. Par ailleurs, les organotitanates sont des produits coûteux et laissent dans le produit final un résidu de titane.

La présente invention a pour but de procurer un procédé de fabrication dans lequel la vitesse de montée en température à la cuisson puisse être plus élevée, et par suite la durée de la cuisson plus courte, et qui ne nécessite pas l'adjonction d'agent de réduction de la viscosité coûteux.

Le procédé de l'invention est caractérisé en ce que la cuisson de la pièce moulée comprend un chauffage en atmosphère oxydante, à une température comprise entre 230 et 330°C, puis le maintien à cette température pendant une durée suffisante pour éliminer la cire et réticuler et oxyder au moins en partie le polystyrène.

Il répond en outre de préférence à au moins l'une des caractéristiques suivantes.

— On règle la température et la durée du chauffage entre 230 et 330°C, de manière à décomposer de 20 à 60% du polystyrène initial.

— La proportion du polystyrène est de 5 à 18% en poids, rapportés au poids de carbure de silicium.

— La proportion de cire est de 1 à 8% en poids, rapportés au poids de carbure de silicium.

— La cire est une cire d'ester de température de volatilisation comprise entre 100 et 300°C.

— On ajoute au mélange de polystyrène et de cire un plastifiant éliminable au cours de la cuisson de la pièce moulée.

— La proportion de plastifiant est de 2 à 6% en poids, rapportés au poids de carbure de silicium.

— Le plastifiant est du phtalate de dioctyle ou de dibutyle.

— Le mélange comprend environ 85% en poids de carbure de silicium et d'adjuvant de frittage, 9% de polystyrène, 2,4% de cire et 3,6% de plastifiant; à l'issue du chauffage en atmosphère oxydante, la perte de poids est de 8 à 9%.

— Après le chauffage en atmosphère oxydante, on soumet la pièce à un traitement thermique sous gaz inerte, par chauffage jusqu'à une température finale de 900°C environ, à une vitesse de montée en température telle que la perte de poids de la pièce se soit stabilisée lorsqu'elle atteint la température finale.

— La vitesse de montée en température est comprise entre 50 et 100°C/h.

Il est décrit ci-après, à titre d'exemple, un procédé de fabrication de pièces en carbure de silicium fritté selon l'invention.

On part de poudre de carbure de silicium obtenue par le procédé Acheson, de la variété cristalline α et de surface spécifique 7 m²/g. La poudre est disposée dans un creuset en carbure de silicium que l'on introduit dans un four à résistance de graphite relié à une pompe à vide, pour un traitement de purification. On met le four sous un vide d'environ 1 mbar, puis on élève la température du four jusqu'à 1200 à 1600°C. On peut éventuellement opérer sous un vide plus poussé, de l'ordre de $10^{-3}$ mbar, à l'aide d'une pompe à vide secondaire. Dans ce cas, on observe une remontée temporaire de pression dans le four, provoquée par les gaz qui se dégagent de la poudre.

On maintient la température pendant 5 min à 12 h, cette durée dépendant de la quantité d'impuretés et variant en sens inverse de la température maximale. Pour une poudre relativement pure, un traitement thermique de 5 min à 1600°C peut suffire.

Après le traitement thermique, la surface spécifique de la poudre n'est plus que de 2 m²/g environ, et sa quantité d'oxygène d'environ 500 ppm. On lui ajoute 1% en poids de bore cristallisé pulvérulent, en dispersant le mélange dans un liquide organique volatil tel que l'essence minérale ou le cyclohexane.

On peut substituer au bore un autre additif de frittage, par exemple 1 à 5% en poids de nitrure de silicium de d'aluminium, qui contient 6 à 90% d'aluminium par rapport au silicium, et 0,025 à 1,0% en poids de bore cristallisé, selon le procédé qui a fait l'objet de la demande de brevet EP-A N° 82.101212.7 du 18 février 1982 de la titulaire.

On broie la suspension dans un broyeur à billes d'acier. Par exemple, pour une suspension de 30 g de l'un des mélanges précédents dans 140 cm³ de cyclohexane, le broyeur contient 1,6 kg de billes de 3 mm de diamètre, en rotation à une vitesse de 300 tr/min. On poursuit le broyage pendant 3 h.

Pour éliminer le fer provenant des billes et des parois du broyeur, on sèche la poudre, puis la disperse dans une solution diluée d'acide chlorhydrique jusqu'à disparition des ions du fer. On lave à l'eau distillée acidulée, puis on décante et sèche la suspension à l'étuve.

On introduit alors dans un malaxeur 85 parties en poids de la poudre obtenue ci-dessus, 9 parties en poids de polystyrène lubrifié vendu sous la désignation commerciale 1531 par la société Ato-Chimie, 2,4 parties de cire d'ester commercialisée par la société BASF, et 3,6 parties de dioctylphtalate vendu par la société PCUK sous la désignation DOP K8.

On poursuit le malaxage pendant 2 h. On laisse refroidir la matière obtenue, on la granule et la tamise.

On effectue le moulage par injection dans un appareil à piston.

On maintient alors la matière à 150°C, à une pression supérieure à 175 bar. On peut également procéder à une mise en forme par extrusion à chaud thermoplastique.

Les pièces obtenues sont alors soumises au traitement de cuisson, en présence d'air, la vitesse de montée en température et la température du palier de cuisson dépendant de leur épaisseur. Par exemple, pour des pièces de 1,3 mm d'épaisseur, on les porte de 20 à 230°C en 2 h, puis on les maintient 28 h à 230°C. Pour des pièces plus épaisses, la vitesse de montée en température serait plus faible et la température finale plus élevée. Après refroidissement, on mesure la perte de poids des pièces, qui doit être d'environ 8 à 9%, de sorte qu'il reste dans les pièces de 6 à 7% d'un produit dérivé du polystyrène, qui peut être déjà au moins en partie sous forme de carbone. La quantité de polystyrène décomposée est d'environ un tiers de la quantité initiale.

On peut opérer aussi avec des mélanges à teneurs plus élevées ou moins élevées en carbure de silicium, notamment 80 à 90% en poids de carbure de silicium, et 10 à 20% de mélange additif de polystyrène, de cire et de plastifiant contenant environ 60% de polystyrène. Pour une teneur de 80% de carbure de silicium, la cuisson peut être considérée comme terminée lorsque environ un quart du polystyrène initial a été éliminé. Après le traitement de cuisson en présence d'air, on soumet les pièces à un traitement thermique sous vide, ou sous gaz inerte (tel que l'argon ou l'azote), en les portant à 900°C environ à une vitesse telle que la perte de poids des pièces, due notamment au dégagement d'éthylène, se soit stabilisée à cette température. Cette vitesse de montée en température peut être de 50 à 100°C/h.

Les pièces obtenues sont alors directement frittables, par exemple à 2100°C sous argon pendant 30 min.

Les pièces frittées ont des masses spécifiques comprises entre 3,05 et 3,20 kg/dm$^3$, soit supérieures ou égales à 95% de la masse spécifique théorique.

Si on effectue sur les mêmes pièces moulées une opération de cuisson selon le même diagramme de températures, mais sans le traitement oxydant, puis le même traitement thermique sous vide ou sous gaz inerte à 900°C, et la même opération de frittage à 2100°C, on n'obtient que des pièces poreuses, d'une porosité ouverte de 20 à 25%, de masse spécifique 2,46 à 2,50 kg/dm$^3$. Il semble que l'on puisse attribuer cette porosité à un manque de carbone libre dû à une dépolymérisation du polystyrène sans carbonisation.

Il est donné dans le tableau, à titre de comparaison, les pertes de poids et les masses spécifiques et porosités finales après frittage de pièces soumises à un chauffage à 230°C, à un traitement thermique sous vide à 900°C et à un frittage à 2100°C tels que décrits ci-dessus, de pièces soumises à un chauffage sous argon puis à un traitement thermique sous vide et au frittage, et enfin de pièces frittées à l'état cru, ou après le seul traitement thermique sous vide.

Dans ce tableau, les termes $\Delta P_{PD}$, $\Delta P_D$, $\Delta P_{TD}$, $\Delta P_F$, $\Delta P_T$, D et P signifient respectivement:

perte de poids (en pour-cent) après chauffage à l'air à 230°C,

perte de poids résultant du traitement thermique sous vide à 900°C,

perte de poids totale après le traitement thermique sous vide,

perte de poids au frittage,

perte de poids totale après le frittage,

masse spécifique (en kilogrammes par décimètre cube), et

porosité (en pour-cent).

L'indice D pour un échantillon indique qu'il a été soumis au traitement thermique sous vide à 900°C.

| | N° échantillon | $\Delta P_{PD}$ | $\Delta P_D$ | $\Delta P_{TD}$ | $\Delta P_F$ | $\Delta P_T$ | D | P |
|---|---|---|---|---|---|---|---|---|
| Chauffage à l'air | 2 | 5,6 | | 5,6 | 10,6 | 16,2 | 2,91 | 4 |
| | 2D | 5,6 | 8,6 | 11,2 | 2,4 | 16,6 | 2,96 | 2,5 |
| | 3 | 9,8 | | 9,8 | 5 | 14,8 | 3,15 | 0 |
| | 3D | 9,8 | 2,2 | 12,0 | 2,9 | 14,9 | 3,13 | 0 |
| Chauffage sous argon | 6 | 5,65 | | 5,65 | 11,2 | 16,8 | 2,47 | 23 |
| | 6D | 5,65 | 9,4 | 15,05 | 2,1 | 17,1 | 2,43 | 24 |
| | 7 | 9,54 | | 9,54 | 6,5 | 16,0 | 2,50 | 22,2 |
| | 7D | 9,54 | 5,1 | 14,6 | 2,0 | 16,6 | 2,50 | 21,5 |
| Pas de chauffage à 230°C | 10 | 0 | | 0 | 16,3 | 16,3 | 2,51 | 22 |
| | 10D | 0 | 14,4 | 14,4 | 2,3 | 16,7 | 2,54 | 20,2 |

Bien que le mode opératoire qui vient d'être décrit ci-dessus paraisse la forme de réalisation préférable de l'invention, on comprendra que certaines modifications peuvent lui être apportées sans sortir du cadre général de celle-ci. En particulier, on peut utiliser une autre cire d'adjonction au polystyrène qu'une cire d'ester microcristalline, par exemple une cire d'hydrocarbure, et un autre plastifiant que le phtalate de dioctyle, par exemple le phtalate de dibutyle. On peut ajouter à la cire une huile de température de volatilisation plus basse. On peut effectuer l'injection dans un appareil à vis.

## Revendications

1. Procédé de fabrication d'une pièce céramique en carbure de silicium fritté, dans lequel

a) on forme un mélange comprenant une poudre de carbure de silicium, au moins un adjuvant de frittage du groupe comprenant le bore ou les composés du bore, le béryllium ou les composés du béryllium, l'aluminium ou les composés de l'aluminium, du poylstyrène formant, en mélange avec une cire de température de volatilisation inférieure à la sienne, un agent de moulage par injection, et procurant par sa carbonisation au cours du frittage de 0,5 à 5% en poids de carbone, rapportés au poids de carbure de silicium,

b) on forme par injection une pièce moulée,

c) on cuit la pièce moulée, et

d) on fritte la pièce moulée cuite à une température comprise entre 1900 et 2200°C, sous atmosphère inerte ou sous vide,

caractérisé en ce que la cuisson de la pièce moulée comprend un chauffage en atmosphère oxydante, à une température comprise entre 230 et 330°C, puis le maintien à cette température pendant une durée suffisante pour éliminer la cire et réticuler et oxyder au moins en partie le polystyrène.

2. Procédé selon la revendication 1, caractérisé en ce que l'on règle la température et la durée du chauffage entre 230 et 330°C, de manière à décomposer de 20 à 60% du polystyrène initial.

3. Procédé selon l'une des revendications 1 ou 2, caractérisé en ce que la proportion de polystyrène est de 5 à 18% en poids, rapportés au poids de carbure de silicium.

4. Procédé selon l'une des revendications 1 à 3, caractérisé en ce que la proportion de cire est de 1 à 8% en poids, rapportés au poids de carbure de silicium.

5. Procédé selon l'une des revendications 1 à 4, caractérisé en ce que la cire est une cire d'ester de température de volatilisation comprise entre 100 et 300°C.

6. Procédé selon l'une des revendications 1 à 5, caractérisé en ce que l'on ajoute au mélange de polystyrène et de cire un plastifiant éliminable au cours de la cuisson de la pièce moulée.

7. Procédé selon la revendication 6, caractérisé en ce que la proportion de plastifiant est de 2 à 6% en poids, rapportés au poids de carbure de silicium.

8. Procédé selon l'une des revendications 6 ou 7, caractérisé en ce que le plastifiant est du phtalate de dioctyle ou de dibutyle.

9. Procédé selon la revendication 7, caractérisé en ce que le mélange comprend environ 85% de carbure de silicium et d'adjuvant de frittage, 9% de polystyrène, 2,4% de cire et 3,6% de plastifiant, et en ce qu'à l'issue du chauffage en atmosphère oxydante la perte de poids est de 8 à 9%.

10. Procédé selon l'une des revendications 1 à 9, caractérisé en ce qu'après le chauffage en atmosphère oxydante on soumet la pièce à un traitement thermique sous gaz inerte, par chauffage jusqu'à une température finale de 900°C environ, à une vitesse de montée en température telle que la perte de poids de la pièce se soit stabilisée lorsqu'elle atteint la température finale.

11. Procédé selon la revendication 10, caractérisé en ce que la vitesse de montée en température est comprise entre 50 et 100°C/h.

## Claims

1. A method of manufacturing a ceramic sintered silicon carbide article consisting of:

(a) mixing a silicon carbide powder, at least one sintering additive of the group comprising boron or boron compounds, beryllium or beryllium compounds, aluminium or aluminium compounds, polystyrene forming an injection moulding agent in a mixture with a wax having a lower volatilization temperature than itself and procuring by its carbonization during the sintering process 0.5 to 5% by weight of carbon relative to the weight of the silicon carbide,

(b) forming a shaped article by injection moulding,

(c) baking the moulded article, and

(d) sintering the baked moulded article at a temperature comprised between 1,900 and 2,200°C under an inert atmosphere or under a vacuum,

characterised in that the baking process of the moulded article comprises a heating step in an oxidizing atmosphere up to a temperature of 230 to 330°C, then maintaining this temperature long enough to eliminate the wax and to reticulate and to oxidize at least part of the polystyrene.

2. A method according to Claim 1, characterised in that the temperature and the duration of heating between 230 and 330°C are adjusted so as to decompose between 20 and 60% of the initial polystyrene.

3. A method according to one of Claims 1 or 2, characterised in that the proportion by weight of polystyrene is between 5 and 18% by weight relative to the weight of silicon carbide.

4. A method according to one of Claims 1 to 3, characterised in that the proportion of wax is between 1 and 8% by weight relative to the weight of silicone carbide.

5. A method according to one of Claims 1 to 4, characterised in that the wax is an ester wax whose volatilization temperature lies between 100 and 300°C.

6. A method according to one of Claims 1 to 5, characterised in that a plasticizer which can be removed during baking of the moulded article is added to the polystyrene and wax mixture.

7. A method according to Claim 6, characterised in that the proportion of plasticizer is between 2 and 6% by weight relative to the weight of the silicone carbide.

8. A method according to one of the Claims 6 or 7, characterised in that the plasticizer is dioctyl phthalate or dibutyl phthalate.

9. A method according to Claim 7, characterised in that the mixture includes about 85% silicon carbide and sintering additive, 9% polystyrene, 2.4% wax and 3.6% plasticizer, and that at the end of the heating in an oxidizing atmosphere the loss of weight is about 8 to 9%.

10. A method according to one of Claims 1 to 9, characterised in that, after the heating under oxidizing atmosphere, the article is submitted to a thermal treatment under inert gas atmosphere by heating it up to a final temperature of about 900° C, the temperature rise rate being such that the loss of weight of the article is stabilized when it reaches the final temperature.

11. A method according to Claim 10, characterised in that the temperature rise rate is comprised between 50 and 100° C/h.

## Patentansprüche

1. Verfahren zur Herstellung eines keramischen Sinterkörpers aus Siliziumkarbid, bei dem man

a) eine Mischung aus einem Siliziumkarbidpulver, mindestens einem Sinterzusatz aus der Gruppe bestehend aus Bor oder den Borverbindungen, Beryllium oder den Berylliumverbindungen, Aluminium oder den Aluminiumverbindungen, und aus Polystyren bildet, das in Vermischung mit einem Wachs einer Verdunstungstemperatur, die niedriger ist als seine eigene, ein Spritzgussagens bildet und durch seine Verkokung während des Sinterns 0,5 bis 5 Gew.-% Kohlenstoff in bezug auf das Gewicht des Siliziumkarbids bildet,

b) mit Hilfe der Spritzgusstechnik ein Gussstück erzeugt,

c) das Gussstück ausheizt, und

d) das ausgeheizte Gussstück bei einer Temperatur zwischen 1900 und 2200° C unter Inertatmosphäre oder unter Vakuum sintert, dadurch gekennzeichnet, dass das Ausheizen des Gussstücks ein Erhitzen unter oxydierender Atmosphäre auf eine Temperatur zwischen 230 und 330° C und dann das Aufrechterhalten dieser Temperatur während eines ausreichenden Zeitraums umfasst, um das Wachs zu entfernen und das Polystyren zumindest teilweise zu vernetzen und zu oxidieren.

2. Verfahren nach Anspruch 1, dadurch gekennzeichnet, dass man die Temperatur und die Dauer des Erhitzens auf 230 bis 330° C so regelt, dass 20 bis 60% des ursprünglichen Polystyrens zersetzt werden.

3. Verfahren nach einem der beiden Ansprüche 1 oder 2, dadurch gekennzeichnet, dass der Anteil an Polystyren zwischen 5 und 18 Gew.-% bezogen auf das Gewicht des Siliziumkarbids liegt.

4. Verfahren nach einem der Ansprüche 1 bis 3, dadurch gekennzeichnet, dass der Wachsanteil zwischen 1 und 8 Gew.-% bezogen auf das Gewicht des Siliziumkarbids liegt.

5. Verfahren nach einem der Ansprüche 1 bis 4, dadurch gekennzeichnet, dass das Wachs ein Esterwachs ist, dessen Verdunstungstemperatur zwischen 100 und 300° C liegt.

6. Verfahren nach einem der Ansprüche 1 bis 5, dadurch gekennzeichnet, dass man der Mischung aus Polystyren und Wachs einen Weichmacher hinzufügt, der während des Ausheizens des Gussstücks entfernbar ist.

7. Verfahren nach Anspruch 6, dadurch gekennzeichnet, dass der Anteil an Weichmacher 2 bis 6 Gew.-% bezogen auf das Gewicht des Siliziumkarbids beträgt.

8. Verfahren nach einem der beiden Ansprüche 6 oder 7, dadurch gekennzeichnet, dass der Weichmacher Dioctyl- oder Dibutylphthalat ist.

9. Verfahren nach Anspruch 7, dadurch gekennzeichnet, dass die Mischung etwa 85% Siliziumkarbids und Sinterzusatz, 9% Polystyren, 2,4% Wachs und 3,6% Weichmacher aufweist und dass am Schluss des Aufheizens unter oxidierender Atmosphäre der Gewichtsverlust 8 bis 9% beträgt.

10. Verfahren nach einem der Ansprüche 1 bis 9, dadurch gekennzeichnet, dass nach dem Ausheizen unter oxidierender Atmosphäre der Körper einer Wärmebehandlung unter Inertgas durch Erhitzen bis auf eine Endtemperatur von etwa 900° C unterzogen wird, mit einer derartigen Temperaturanstiegsgeschwindigkeit, dass der Gewichtsverlust des Körpers stabilisiert ist, wenn er die Endtemperatur erreicht.

11. Verfahren nach Anspruch 10, dadurch gekennzeichnet, dass die Temperaturanstiegsgeschwindigkeit zwischen 50 und 100° C/h liegt.